# EUROPÄISCHE PATENTSCHRIFT

(11) **EP 0 668 347 B1**
(45) Veröffentlichungstag und Bekanntmachung des Hinweises auf die Patenterteilung: **07.07.1999**
(21) Anmeldenummer: 95101838.1
(22) Anmeldetag: 10.02.1995
(51) Int. Cl.: C12C 13/02

(54) **Würzepfanne zum Kochen von Würze für die Bierherstellung**
Pan for boiling wort during beer production
Chaudière pour l'ébullition de moût au cours de la préparation de la bière

(30) Priorität: 16.02.1994 DE 9402547 U
(43) Veröffentlichungstag der Anmeldung: 23.08.1995
(73) Patentinhaber: ANTON STEINECKER ENTWICKLUNGS GmbH & Co., D-85318 Freising (DE)
(72) Erfinder: Widhopf, Martin, D-85354 Freising/Pulling (DE)
(74) Vertreter: Grünecker, Kinkeldey, Stockmair & Schwanhäusser Anwaltssozietät

(56) Entgegenhaltungen:
- DE-U- 9 314 102
- DATABASE WPI Section PQ, Week 1787 Derwent Publications Ltd., London, GB; Class Q56, AN 87-120613 & SE-A-8 504 146 (STENA SCANFORS AB) , 7.März 1987

## Beschreibung

Die Erfindung betrifft eine Würzepfanne zum Kochen von Würze für die Bierherstellung, mit einem Dunstabzugsrohr und mit einem angeschlossenen Brüdenverdichter, wobei der Schwaden während des Aufheizens der Würzepfanne über das Dunstabzugsrohr ins Freie gelangt und beim Kochen mittels einer Absperrvorrichtung über den Brüdenverdichter umgeleitet wird.

Aus der Praxis ist es bekannt, beim Kochen von Würze für die Bierherstellung Würzepfannen einzusetzen, an die sogen. Brüdenverdichter abgeschlossen werden können. In die Brüdenverdichter wird der beim Kochen entstehende Schwaden eingeleitet und die im Schwaden enthaltene Energie teilweise zurückgewonnen. Der Schwaden gelangt dabei nicht ins Freie. Das Einleiten des Schwadens erfolgt dann, wenn in der Würzepfanne die Würze ihre Kochtemperatur erreicht hat. Bis zu diesem Zeitpunkt wird der sich allmählich bildende Schwaden über das Dunstabzugsrohr ins Freie geleitet. Nach Erreichen der Kochtemperatur wird eine sich darauf befindende Absperrklappe geschlossen, so daß dann der Schwaden zum Brüdenverdichter umgeleitet wird. Wenn der Schwaden über den Brüdenverdichter abgeleitet wird, muß sichergestellt sein, daß in der Pfanne kein so hoher Überdruck, aber auch kein zu starker Unterdruck entsteht, um eine Beschädigung der Pfanne zu vermeiden. Es ist deshalb bekannt, an die zum Brüdenverdichter führende Leitung wirkungsmäßig ein Wasserschloß anzuschließen, das druckregulierend wirkt und im Falle eines zu hohen Überdrucks das Ableiten von Schwaden über das Dunstabzugsrohr und im Falle eines zu starken Unterdrucks das Ansaugen von Luft über das Dunstabzugsrohr bewirkt.

Der Nachteil dieser bekannten Konstruktion liegt nun insbesondere darin, daß die als Absperrklappen ausgebildeten Absperrvorrichtungen in den Dunstabzugsrohren relativ aufwendig und teuer sind.

Aufgabe der Erfindung ist es daher, eine Würzepfanne vorzuschlagen, die mit weniger Aufwand bei gleicher Wirkung verwirklicht werden kann.

Gelöst wird diese Aufgabe dadurch, daß die Absperrvorrichtung von einem Wasserschloß gebildet wird, das in Strömungsrichtung des Schwadens im Dunstabzugsrohr hinter dem Abzweig zum Brüdenverdichter angeordnet ist.

Mit dieser Lösung wird die Absperrvorrichtung von einem Wasserschloß gebildet, das sich wesentlich einfacher verwirklichen läßt als die im Stand der Technik benötigte Steuerklappe. Darüber hinaus kann das Wasserschloß gleichzeitig auch noch die Funktion der Über- und Unterdruckabsicherung übernehmen, so daß das Wasserschloß also die im Stand der Technik durch eine separate Absperrvorrichtung und ein Wasserschloß gelösten Aufgaben allein übernehmen kann.

Dadurch werden die Kosten für separate Absperrvorrichtungen gespart, so daß der Herstellungsaufwand geringer ist.

In einer sehr vorteilhaften Ausgestaltung wird die Wasservorlage im Wasserschloß von kondensiertem Schwaden gebildet. Diese Lösung stellt eine sehr einfache Ausgestaltung der Erfindung dar, weil damit bei stärker werdendem Schwaden und größer werdenden Verdampfungsmengen automatisch durch Kondensation einer entsprechenden Schwadenmenge zur Bildung der Wasservorlage im Wasserschloß zu dem Zeitpunkt, in dem der eigentliche Kochvorgang beginnt und beim Stand der Technik die Absperrvorrichtungen geschlossen werden müßten, eine entsprechende Absperrung automatisch eintritt.

In einer weiteren vorteilhaften Ausgestaltung der Erfindung ist vorgesehen, daß das Wasserschloß von einem inneren, den Deckel der Würzepfanne durchsetzenden Rohrstück, einer das obere Ende des Rohrstücks übergreifenden Siphonglocke und einem Dunstabzugsrohrabschnitt gebildet ist. Bei dieser Lösung wird über der Würzepfanne im Bereich des Deckels der Würzepfanne in einfacher Weise eine Art siphonartige Umlenkung des Schwadens bewirkt, wobei dann bei Wasservorlage in dem so gebildeten Wasserschloß die Über- und Unterdruckabsicherung automatisch eintritt.

In weiterer vorteilhafter Ausgestaltung der Erfindung ist vorgesehen, daß in den Bereich der Wasservorlage ein Überlaufrohr mündet, dessen Oberkante über der Unterkante der Siphonglocke liegt. Die Höhendifferenz zwischen der Mündung des Überlaufrohrs und der Unterkante der Siphonglocke und das in diesem Bereich vorliegende Volumen für die Wasservorlage bestimmt dann das Ansprechverhalten bei Überdruck.

In einer weiteren vorteilhaften Ausgestaltung der Erfindung ist vorgesehen, daß im Bereich der Mündung des Überlaufrohrs ein Schauglas zur Beobachtung der Wasservorlage im Wasserschloß angeordnet ist. Das Schauglas ermöglicht in einfacher Weise die Einsichtnahme in den Bereich der Wasservorlage, so daß einfach überprüft werden kann, ob die Funktion als Über- und Unterdrucksicherung gewährleistet ist.

In weiterer vorteilhafter Ausgestaltung ist vorgesehen, daß der Brüdenverdichter über eine durch die Seitenwand der Würzepfanne durchtretende Leitung an das Rohrstück innerhalb der Würzepfanne angeschlossen ist. Bei dieser Ausgestaltung wird das zum Brüdenverdichter führende Schwadenrohr anders als im Stand der Technik innerhalb der Würzepfanne geführt, so daß der Sudhausbedienungsraum, durch den im Stand der Technik üblicherweise die Schwadenrohre zum Brüdenverdichter verlaufen, frei bleiben kann.

Es kann auch weiterhin vorgesehen sein, innerhalb der Siphonglocke eine Wasserspritzdüse anzuordnen. Die Wasserspritzdüse kann dann einmal zum Reinigen eingesetzt werden, aber auch zur Bildung der Wasservorlage, wenn die Wasservorlage nicht allein über den Schwaden gebildet werden soll.

In vorteilhafter Weise ist schließlich das Wasserschloß konzentrisch zur Achse der Würzepfanne angeordnet.

Die Erfindung läßt sich gleichermaßen einsetzen für Würzepfannen mit Innen- oder Außenkocher und auch für Whirlpoolpfannen oder kombinierte Würze- und Whirlpoolpfannen bzw. Läuterbottiche unter Inertgasdruck.

Im folgenden wird die Erfindung anhand eines in der Zeichnung dargestellten Ausführungsbeispiels weiter erläutert und beschrieben.

In der Zeichnung ist eine Würzepfanne in Form einer Whirlpoolpfanne dargestellt, die insgesamt mit 1 bezeichnet ist. Die Pfanne ist in einem unteren Raum 4 auf Füßen 3 abgestützt und ragt mit ihrem oberen Teil durch die Trennwand 5 in ein Sudhaus in einen Sudhausbedienungsraum 6 hinein. Die Pfanne besitzt bei dem dargestellten Ausführungsbeispiel einen Innenkocher 2, mit dem die in die Pfanne eingeleitete Würze erhitzt werden kann.

Beim Erhitzen wird die Würze gegen den Umlenkschirm 24 gerichtet und strömt dann nach unten in die Pfanne ab, wie dies allgemein bekannt ist.

Würzepfannen dieser Art sind im allgemeinen als Rundbehälter, konzentrisch zu einer Achse A ausgebildet und durch einen Deckel 13 nach oben abgeschlossen.

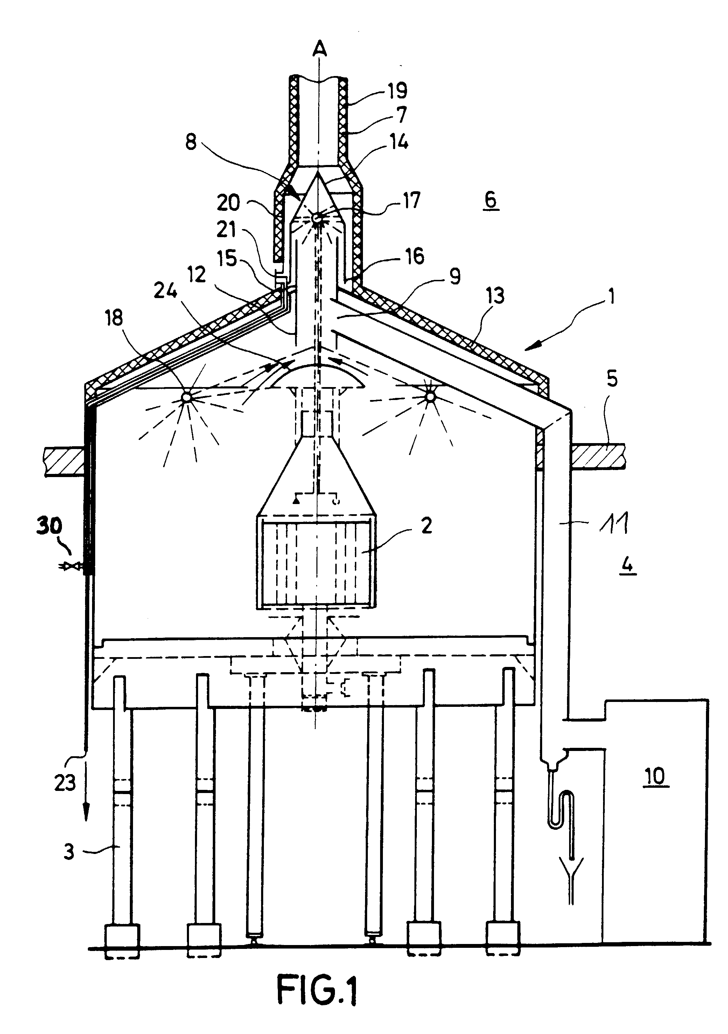

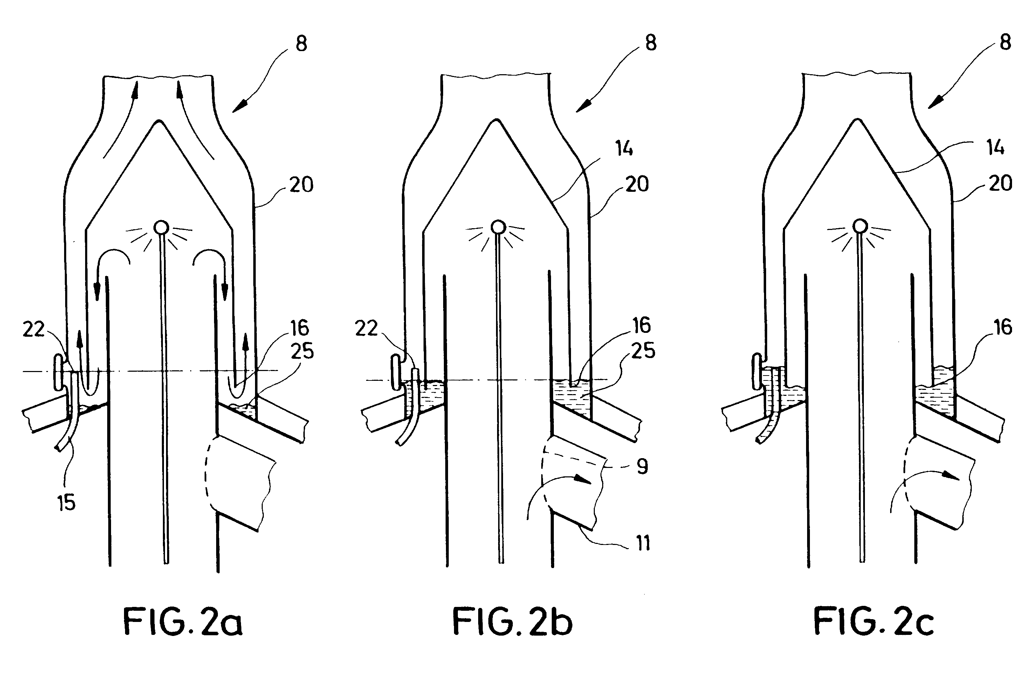

Konzentrisch zur Achse A ist in der Spitze des Deckels 13 erfindungsgemäß das Wasserschloß 8 angeordnet. Dieses Wasserschloß wird gebildet von dem Dunstabzugsrohrabschnitt 20 als äußere Wand, dem oberen Teil des Rohrstückes 12 sowie der Siphonglocke 14, die mit ihrer Unterkante 16 zwischen dem Dunstabzugsrohrabschnitt 20 und dem oberen Teil des Rohrstücks 12 positioniert ist. Diese Siphonglocke ist ebenfalls konzentrisch zur Achse A umlaufend mit kreisförmigem Querschnitt ausgebildet, ebenso wie das Rohrstück 12 und der Dunstabzugsrohrabschnitt 20. Zur Bildung des Dunstabzugsrohrabschnitts 20 ist das Dunstabzugsrohr 7 im Bereich des Wasserschlosses 8 mit einem erweiterten Querschnitt ausgebildet. Im Bereich der Wasservorlage (s. auch Figur 2a bis 2c) ist ein Schauglas 21 angeordnet, das etwa auf Höhe der Unterkante 16 der Siphonglocke 14 liegt. Außerdem mündet in diesen Bereich ein Überlaufrohr 15, das ebenfalls durch den Innenraum der Würzepfanne entlang des Deckels 13 und dann durch eine Seitenwand hindurchgeführt wird und in den Ablauf 23 mündet.

Innerhalb der Pfanne 4 befinden sich noch die Spritzdüsen 18 zur Einleitung von Wasser für bekannte Zwecke. Im Bereich des Wasserschlosses 8 ist innerhalb der Siphonglocke 14 oberhalb der Oberkante des Rohrstücks 12 ebenfalls eine Wasserspritzdüse 17 angeordnet. Der gesamte Deckelbereich und auch der Rohrabschnitt 20 sowie das Dunstabzugsrohr 7 sind mit einer Isolierung 19 ummantelt.

Innerhalb der Pfanne 1 zweigt außerdem vom Rohrstück 12 am Abzweig 9 das Schwadenrohr 11 zum Brüdenverdichter 10 ab. Dieses Schwadenrohr tritt an der in der Zeichnung rechts dargestellten Seitenwand durch die Würzepfanne aus und wird dann unmittelbar durch die Trennwand 5 (Boden) nach unten zum Brüdenverdichter 10 geführt. Es verläuft also praktisch nicht im Sudhausbedienungsraum 6, was dort entsprechenden Freiraum schafft.

Im folgenden wird nun die Betriebsweise der erfindungsgemäßen Vorrichtung anhand der Figuren 2a bis 2c weiter erläutert.

Wenn die Würze über nicht näher dargestellte, bekannte Einlauf leitungen in das Innere der Würzepfanne 1 eingeleitet worden ist, kann mit dem Sud begonnen werden. Dabei wird die Würze über den Innenkocher 2 erhitzt. Bereits während der Erwärmungsphase entstehen Dämpfe, die nach oben durch das Rohrstück 12 hindurch um die Oberkante des Rohrstücks herum nach unten und unter der Unterkante 16 der Siphonglocke 14 hindurch wieder nach oben in das Dunstabzugsrohr 7 gelangen und dort ins Freie treten können. Mit stärker werdender Dampf- bzw. Schwadenbildung kondensiert allmählich eine immer größere Flüssigkeitsmenge im Bereich der Siphonglocke und sammelt sich am durch den Deckel 13 gebildeten Boden des Wasserschlosses 8 unter Bildung einer Wasservorlage 25. Der Pegel der Wasservorlage 25 steigt allmählich an, bis die Mündung 22 des Überlaufrohres 15 erreicht ist, wie dies in der Figur 2b dargestellt ist. Zusätzlich zu dem sich durch Kondensation des Schwadens bildenden Wasser als Wasservorlage 25 kann auch noch über das Ventil 30, das an das Ablaufrohr 15 angeschlossen ist, durch Einspeisen von Wasser eine geeignete Wassermenge zugeführt werden.

Bereits bei Erreichen der Unterkante 16 der Siphonglocke 14 bildet die Wasservorlage 25 dann einen Gasabschluß, so daß der Schwadendampf am freien Abzug durch das Dunstabzugsrohr 7 gehindert wird. Damit tritt die Absperrwirkung in Funktion. Der Schwaden tritt dann zwangsläufig durch den Abzweig 9, wie in der Figur 2b mit dem Pfeil dargestellt, in das Schwadenrohr 11 ein und gelangt zum Brüdenverdichter 10, wo er in bekannter Weise verdichtet wird. Treten nun in der Würzepfanne Druckschwankungen auf, wirkt die Wasservorlage 25, wie in Figur 2c für den Fall eines Überdrucks dargestellt, als Überdruck- und Unterdrucksicherung. Im Falle eines Überdrucks wird die Wassersäule innerhalb der Siphonglocke nach unten gedrückt, wobei die überschüssige Wassermenge durch die Mündungsöffnung 22 des Überlaufrohrs entweichen kann. Bei zu starkem Überdruck kann ein vollständiges Ausdrücken des Wassers stattfinden, so daß der Schwaden dann wieder frei durch das Dunstabzugsrohr 7 entweichen kann. Durch geeignete Anordnung der Mündungsöffnung 22 gegenüber der Unterkante der Siphonglocke 14 können geeignete oder gewünschte Druckwerte eingestellt werden. Hierzu kann es dann auch günstig sein, wenn das Überlaufrohr bzw. dessen Mündung höhenverschieblich im Bereich der Wasservorlage angeordnet ist. Tritt andererseits in der Pfanne ein Unterdruck auf, so wird die Wasservorlage durch den dabei entstehenden Sog im Bereich zwischen dem Rohrstück 12 und der Siphonglocke 14 nach oben gesaugt. Diese Sogwirkung hat zur Folge, daß sich der Pegel außerhalb der Siphonglockenwand zwischen dem Dunstabzugsrohrabschnitt 20 soweit absenkt, daß Gas unter der Unterkante 16 hindurch aus der Umgebungsluft über das Dunstabzugsrohr 7 nach innen in die Pfanne eingesaugt wird, und dadurch auch eine Absicherung gegen Unterdruck stattfindet. Das erfindungsgemäße Wasserschloß 8 erfüllt somit sowohl die Funktion eines Absperrorgans zwischen Dunstabzugsrohr und Brüdenverdichter als auch die Funktion der Unterbzw. Überdruckabsicherung. Nach Beendigung des Kochvorganges kann die Wasservorlage ebenfalls über das Ablaufrohr 23 abgelassen werden, wozu entweder die Mündung 21 des Überlaufrohres 15 entsprechend nach unten verschoben wird, oder aber ein nicht näher dargestelltes zulaufendes Ablaufrohr von der Bodenfläche des Wasserschlosses geöffnet wird.

## Patentansprüche

1. Würzepfanne zum Kochen von Würze für die Bierherstellung, mit einem Dunstabzugsrohr und mit einem Brüdenverdichter, wobei der Schwaden während des Aufheizens der Würzepfanne über das Dunstabzugsrohr ins Freie gelangen kann und beim Kochen mittels einer Absperrvorrichtung über den Brüdenverdichter umgeleitet werden kann, **dadurch gekennzeichnet**, daß die Absperrvorrichtung von einem Wasserschloß (8) gebildet wird, das in Strömungsrichtung des Schwadens im Dunstabzugsrohr (7) hinter dem Abzweig (9) zum Brüdenverdichter (10) angeordnet ist.

2. Würzepfanne nach Anspruch 1, **dadurch gekennzeichnet,** daß die Wasservorlage (25) im Wasserschloß (8) durch Kondensation des Schwadens gebildet ist.

3. Würzepfanne nach Anspruch 1 oder 2, **dadurch gekennzeichnet**, daß das Wasserschloß (8) von einem inneren, den Deckel der Würzepfanne durchsetzenden Rohrstück (12), einer das obere Ende des Rohrstückes übergreifenden Siphonglocke (14) und einem Dunstabzugsrohrabschnitt (20) gebildet ist.

4. Würzepfanne nach einem der vorangegangenen Ansprüche, **dadurch gekennzeichnet**, daß in den Bereich der Wasservorlage (25) ein Überlaufrohr (15) mündet, dessen Oberkante (22) über der Unterkante (16) der Siphonglocke (14) liegt.

5. Würzepfanne nach einem der vorangegangenen Ansprüche, **dadurch gekennzeichnet**, daß im Bereich der Mündung (22) des Überlaufrohres (15) ein Schauglas (21) zur Beobachtung der Wasservorlage (25) im Wasserschloß (8) angeordnet ist.

6. Würzepfanne nach einem der vorangegangenen Ansprüche, **dadurch gekennzeichnet**, daß der Brüdenverdichter (10) über ein durch die Seitenwand der Würzepfanne (1) durchtretendes Schwadenrohr (11) an das Rohrstück (12) innerhalb der Würzepfanne angeschlossen ist.

7. Würzepfanne nach einem der vorangegangenen Ansprüche, **dadurch gekennzeichnet**, daß innerhalb der Siphonglocke (14) eine Wasserspritzdüse (17) angeordnet ist.

8. Würzepfanne nach einem der vorangegangenen Ansprüche, **dadurch gekennzeichnet**, daß das Wasserschloß (8) konzentrisch zur Achse (A) der Würzepfanne angeordnet ist.

## Claims

1. A wort kettle for boiling wort for brewing, comprising a vapor escape pipe and a vapor compressor, wherein vapor can escape to the outside via said vapor escape pipe during heating of said wort kettle and can be diverted by means of a shut-off device via said vapor compressor during boiling, **characterized in** that said shut-off device is formed by a surge tank (8) which is arranged in the flow direction of said vapor in said vapor escape pipe (7) after a branch (9) towards said vapor compressor (10).

2. The wort kettle according to claim 1, **characterized in** that a water seal (25) is formed in said surge tank (8) by condensation of said vapor.

3. The wort kettle according to claim 1 or 2, **characterized in** that said surge tank (8) is formed by an internal pipe member (12) extending through the cover of said wort kettle, a siphon bell (14) gripping over the upper end of said pipe member, and a vapor escape pipe section (20).

4. The wort kettle according to any one of the preceding claims, **characterized in** that an overflow pipe (15) whose upper edge (22) is positioned above the lower edge (16) of said siphon bell (14) terminates in the area of said water seal (25).

5. The wort kettle according to any one of the preceding claims, **characterized in** that an inspection glass (21) is arranged in the area of said opening (22) of said overflow pipe (15) for inspecting said water seal (5) in said surge tank (8).

6. The wort kettle according to any one of the preceding claims, **characterized in** that said vapor compressor (10) is connected to said pipe member (12) within said wort kettle via a vapor pipe (11) extending through the side wall of said wort kettle (1).

7. The wort kettle according to any one of the preceding claims, **characterized in** that a water spray nozzle (17) is arranged within said siphon bell (14).

8. The wort kettle according to any one of the preceding claims, **characterized in** that said surge tank (8) is concentrically arranged relative to axis (A) of said wort kettle.

## Revendications

1. Chaudière à moût servant à faire bouillir le moût pour la fabrication de la bière, avec un tube d'extraction de vapeur et avec un condenseur de buées, la vapeur parvenant à l'air libre par l'intermédiaire du tube d'extraction de vapeur pendant le réchauffement de la chaudière à moût et pouvant être détournée vers le condenseur de buées au moyen d'un dispositif d'obturation pendant l'ébullition, **caractérisée en ce que** le dispositif d'obturation est formé par une chambre de compensation (8), qui est disposée dans le sens d'écoulement de la vapeur dans le tube d'extraction de vapeur (7) derrière la bifurcation (9) vers le condenseur de buées (10).

2. Chaudière à moût selon la revendication 1, **caractérisée en ce que** la réserve d'eau (25) dans la chambre de compensation (8) est formée par la condensation de la vapeur.

3. Chaudière à moût selon la revendication 1 ou 2, **caractérisée en ce que** la chambre de compensation (8) est formée par un tronçon de tube (12) intérieur traversant le couvercle de la chaudière à moût, une cloche de siphon (14) passant par dessus l'extrémité supérieure du tronçon de tube et une section de tube d'extraction de vapeur (20).

4. Chaudière à moût selon l'une des revendications précédentes, **caractérisée en ce qu**'un tube de trop-plein (15), dont le bord supérieur (22) est situé au-dessus du bord inférieur (16) de la cloche de siphon (14), débouche dans la zone de la réserve d'eau (25).

5. Chaudière à moût selon l'une des revendications précédentes, **caractérisée en ce qu**'un regard (21) pour l'observation de la réserve d'eau (25) dans la chambre de compensation (8) est disposé dans la zone de la bouche (22) du tube de trop-plein (15).

6. Chaudière à moût selon l'une des revendications précédentes, **caractérisée en ce que** le condenseur de buées (10) est raccordé par l'intermédiaire d'un tube de vapeur (11) traversant la paroi latérale de la chaudière à moût (1) au tronçon de tube (12) à l'intérieur de la chaudière à moût.

7. Chaudière à moût selon l'une des revendications précédentes, **caractérisée en ce qu**'une buse de pulvérisation d'eau (17) est disposée à l'intérieur de la cloche de siphon (14).

8. Chaudière à moût selon l'une des revendications précédentes, **caractérisée en ce que** la chambre de compensation (8) est disposée concentriquement à l'axe (A) de la chaudière à moût.
